# EUROPEAN PATENT APPLICATION

(11) **EP 0 813 808 A2**
(43) Date of publication of application: **29.12.1997**
(21) Application number: 97304143.7
(22) Date of filing: 13.06.1997
(51) Int. Cl.: A01G 9/00

(54) **Improvements relating to aquatic plants**

(30) Priority: 17.06.1996 GB 9612637
(71) Applicant: Stapeley Water Gardens Limited, Nantwich, Cheshire CW5 7LH (GB)
(72) Inventor: Davies, Ray George Andrew, Nantwich, Cheshire CW5 7LH (GB)
(74) Representative: Sales, Robert Reginald

(57) **Abstract**

A method of handling aquatic plants. The method comprising providing the plant (2) and a layer of soil (3) in an impermeable pot (1), with water (4) in the container. This enables the plant to be propagated, displayed and transported as a single unit in an advantageous manner, and without the use of expensive tanks or pools.

## Description

The invention relates to aquatic plants, and especially to the propagating, growing, packaging, transporting, display and sale of aquatic plants.

Aquatic plants are normally grown in tanks or large pools of water. The plants are rooted either in soil on the bottom of the tank or in basket-like crates filled to the top with soil which are placed in the tank or pool.

Commercial growers of aquatic plants commonly propagate the plants in large tanks for sale. When the plants are ready for supply to a retailer, such as a garden centre, the plants are uprooted from the soil and transferred bare-rooted into packing crates. The plants are then transported, out of the soil and water, to the retailer, where the plants are replanted into soil in a display pool in the garden centre.

Similarly, when a customer chooses a plant to buy, the plant is simply uprooted from the display pool and carried, again bare-rooted, in, for example, a plastic bag, to its final location, where the customer replants it in soil in a pool or in a crate for placement in the pool.

Alternatively, the plants may be propagated and sold in standard plant pots used in garden centres for conventional plants, or in special pots for aquatic plants with a lower region formed like a mesh. In those cases, to ensure that the plants receive enough water, the pots stand in a layer of water or on a capillary mat, when they are being propagated or put on display for sale, and the water is absorbed into the soil by way of the drainage holes in the pots or by way of the mesh.

A disadvantage of propagating plants, and displaying them for sale, in a tank is that it can be difficult and messy to separate and remove an individual plant for sale. It is also difficult to give the plants separate sale. It is also difficult to give the plants separate care and attention in those circumstances. Furthermore, if the plants are sold and transported bare-rooted after removal from a tank, there is a significant risk of damage to the plants, including the roots. Aquatic plants need special treatment to survive, and in the cases both of plants sold in crates or pots and those sold bare-rooted, it is often the case that staff at the retailers do not have sufficient skill and knowledge in planting and caring for aquatic plants with the result that many plants die or are spoilt.

An object of the present invention is to mitigate or overcome the above-mentioned disadvantages.

Accordingly, the present invention provides a method of handling an aquatic plant comprising providing the plant and a layer of soil in an impermeable portable container. Throughout this specification, the term "soil" includes not only earth-based media but any medium in which a living plant can be rooted or which provides the necessary nutrients for a plant. Some examples other than soil are rockwool, gravel, vermiculite, gel, sand and peat.

By providing an aquatic plant on or in soil in a portable impermeable container, the entire cycle of supply of a plant from propagation to transplantation in the end user's pool can be carried out easily and economically and attractively. There is the additional psychological benefit to retailer and customer that the aquatic plant may appear on sale in a recognizable format, that is, the size and colour of pot containing the plant may be chosen to resemble pots for herbaceous-type plants on sale in nurseries, which are already familiar.

At the grower's, individual plants can be propagated in their own containers, which makes care of the plant particularly easy. The plants prosper because they do not have to compete with other plants for nutrients. By choosing an appropriate size of container and amount of soil, the grower can select optimum growing conditions, at least as far as soil and space are concerned, for the type, age and size of the plant. As a result of providing the plant within soil in a portable container, the plant can be rendered easily transportable, for example, from the grower to the retailer, or from the retailer to the customer, or for rearrangement of a display, with reduced risk of damage to the plant. Thus the plant can easily be handled and yet remain in peak condition. Because the container is impermeable, water can be added to the container and is retained. Furthermore, added water accumulates within the container and when a sufficient quantity of water is added a pool is formed on top of the soil. Thus, water can simply be added to the container to provide the conditions the plant needs, in order to survive and to be displayed to best effect. Maintenance of the plant on retail display requires no other knowledge or effort than that required by herbaceous pot-grown plants in retail nursery, that is, the topping up with water from time to time as required.

Water is preferably provided within the container. Preferably, sufficient water is provided to form a pool on top of the soil.

The method may comprise the step of removing water from the container. If, say, the plant has been grown in its container at a commercial grower then, before the plant is transported, water can be tipped out of the container leaving the plant in the soil in the container. The plant can then be transported without the risk of water spilling over the rim of the container in transit. Similar considerations apply when transferring the plant from the retailer to the consumer.

The method may comprise the step of transporting the plant in the soil in the container.

The method may comprise transferring the container into a pool. Instead of growing or displaying the plant in its own container it may be preferred, either by the consumer or by a retailer, to place the plant, for example, with other plants, in a display pool. The container could be filled up with soil before placing in the pool. Alternatively, the plant may be transplanted into a larger crate or container for putting in a pool, or transplanted straight into soil in the pool.

A particularly useful application is one in which the plant is displayed for sale.

Advantageously, the container is a pot.

The method may be for propagating the plant.

The invention also provides a portable impermeable container containing a layer of soil and an aquatic plant.

The container may also contain water. Preferably, the container contains sufficient water to form a pool on the surface of the soil. The depth of the pool may vary, depending on the plant type or the individual preference of the grower.

The container may be sized to receive, and may contain, a single plant of merchantable size. That is to say, it may be large enough to contain the single plant without cramping it but without inordinate surplus space. The container may be sized to contain, and may contain, a plurality of plants of merchantable size, not necessarily of the same size.

The depth of the soil may be approximately one third of the depth of the container. Alternatively, the depth of the soil may be approximately two thirds of the depth of the container, or one half of the depth of the container.

The aquatic plant may be, for example, an oxygenator, a floating plant, a marginal, a water lily or a bog plant.

Advantageously, the container is a pot and preferably a plant pot without drainage holes.

An embodiment of the invention will now be described with reference to the accompanying drawings, of which:
Fig. 1 is a cross-section of a pot containing an aquatic plant;
Fig. 2 is a representation of a pool containing aquatic plants;
Fig. 3 is a representation of a pool containing a pot as shown in Fig. 1; and
Fig. 4 is a diagram of pot.

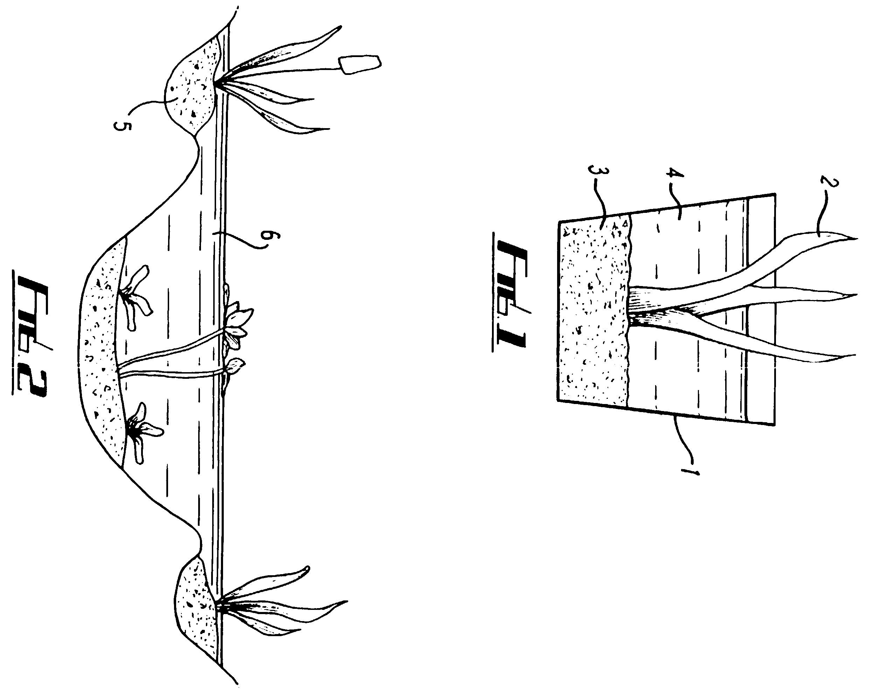

Fig. 1 shows a pot 1 for growing, displaying and distributing an aquatic plant 2, such as, for example, a water lily.

The pot 1 is made of impervious material, such as plastics material. Other suitable materials include terracotta and ceramics. Unlike standard pots for plants, the pot does not have a drainage hole or other drainage means.

The pot has a circular cross-section and tapers towards the base, and, other than having no drainage holes, resembles a conventional pot for plants. In the example shown, the diameter of the open end of the pot is approximately 17.5cm, the diameter of the base of the pot is approximately 13cm and the height of the pot is approximately 19cm. That size of pot is suitable for a wide range of commonly-sold plants, but other shapes and sizes of pots or containers could also be used, especially for very large or very small plants.

A layer of soil 3 is provided at the bottom of the pot and the roots of the aquatic plant are planted in that layer of soil. As shown, water has been added in sufficient quantity to form a layer of water 4 on the surface of the soil to form a pool. The surface of the pool of water is close to but below the rim of the pot, to derive the best display of the plant on the surface of the water, although the surface may be well below the rim of the pot.

The material and dimensions of the pot 1 have been chosen to accommodate a single aquatic plant 2 and also so that the pot is easily portable when it contains the desired amount of soil 3 and the aquatic plant. Further details regarding the depth of the soil 3 and water 4 levels for particular examples of plants are given below.

The pot 1 according to the invention can be used to contain a plant throughout the supply chain from grower to consumer, using the following method:

A commercial grower and wholesaler, instead of propagating and growing aquatic plants in a standard-sized pool, or in conventional containers, crates or baskets, plants individual plants in individual pots 1, as shown in Fig. 1. By choosing a suitably-sized pot 1, and appropriate levels for the soil and water layer, ideal conditions can be selected for each individual plant.

When the plants are to be shipped to the retailer, the wholesaler removes the free water from each pot 1 by tipping the water off. Each plant 2 is retained with its roots in the soil layer 3, which will usually remain wet. The plants 2 are then transported in their pots 1 to the retailer. The plants are kept separate with the result that there is reduced damage to the plants in transit. The risk of damage to roots, especially, is reduced because they are retained in the soil 3.

When the pots 1 arrive at the retailer, for example, at a garden centre, they can be arranged in a display for sale. The retailer simply adds sufficient water 4 to each pot 1 to form a pool of the desired depth on the surface of the soil 3 to keep the plants 2 alive and in good condition. Directions may be included with the plants 2 by the grower so that the appropriate depth of water 4 is provided. After water 4 has been added, the plants 2 are displayed to maximum effect in their own individual pools.

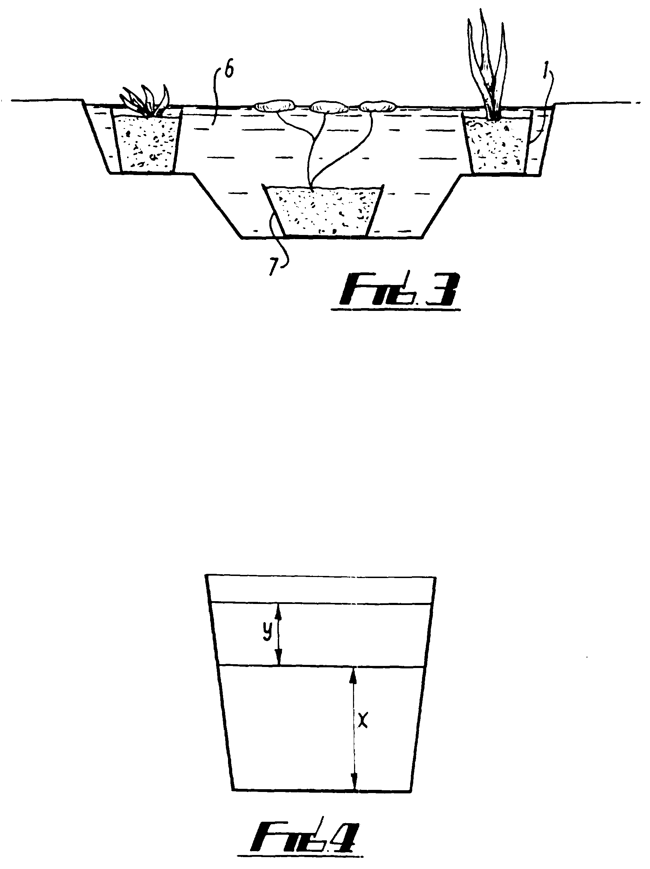

Similarly, when a customer at the garden centre chooses a plant, the retailer removes the free water 4 from the pot 1 and the customer can take the plant 2 home in the soil in its pot. When the customer gets to the place where the plant is to be kept, he/she may choose to transplant the plant 2 from the pot 1 into soil 5 in a pool 6, as shown in Fig. 2. The plant could instead be transplanted into a larger crate 7, which can be placed on the bottom of the pool, or on a shelf in the pool, as shown in Fig. 3. Alternatively, soil may be added to the pot 1 in which the plant was transported to fill the pot, as required by the particular plant variety, with the pot itself then being simply placed in the pool, also shown in Fig. 3. Of course, it may be preferred simply to retain the plant 2 in its individual pot 1, in which case water is added to the pot by the customer to achieve the necessary growing conditions. Such a solution would be desirable to people who do not have a garden large enough for a full-sized pool, but who would like a water feature. A number of plants each in individual pools in their own pots, or similar water-tight containers, could be arranged to make a display. Because the pots are portable, at least when they contain only the soil and plant, the display can easily be rearranged after tipping off the water that forms the pool in each pot.

As will be appreciated, different types of plants require different conditions to flourish. For aquatic plants, the preferred amount of soil and water, especially the ratio of the depth of soil (x) to the depth of water formed as a pool on the surface of the soil (y), (as shown in Fig. 4) varies for each type of plant. Examples of suggested amounts of soil and water will be given below for a variety of types of aquatic plants.

Oxygenating plants and floating plants require only a small amount of soil, to provide nutrients, and a large amount of water. The ratio of depth of water (y) to depth of soil (x) for such plants is approximately 3 to 1 to 6 to 1. For example, a depth of 25-50mm of soil is suitable with about 150mm in depth of water.

For deep marginals and water lilies, the ratio of depth of water (y) to depth of soil (x) is preferably between I to 1 and 2 to 1. For example, the depth of soil might be about 75-100mm and the water depth about 100-150mm.

For other marginal plants, the ratio of depth of water (y) to depth of soil (x) is preferably about 1 to 2.

For bog plants, at most only a shallow layer of water is needed.

As explained above, as a result of the invention, easy methods of growing, propagating, packaging, transporting and displaying an aquatic plant are provided. Although the invention has been described with reference to a single aquatic plant in a pot, more than one plant could be included in any given pot, as long as the nature of the pot and plants are such that the pot is easily portable when it contains the soil and the plants, and the plants will all grow in the same depth of water.

## Claims

1. A method of handling an aquatic plant (2) characterised in that the method comprises providing the plant (2) and a layer of soil (3) (as hereinbefore defined) in an impermeable portable container (1).

2. A method according to claim 1, characterised in that the method comprises the step of providing water (4) within the container (1).

3. A method according to claim 2, characterised in that sufficient water (4) is provided to form a pool on top of the soil (3).

4. A method according to any of claims 1 to 3, characterised in that the method comprises the step of removing water (4) from the container (1).

5. A method according to any of claims 1 to 4, characterised in that the method comprises transporting the plant (2) in the soil (3) in the container (1).

6. A method according to claim 5, characterised in that the method comprises transferring the container (1) into a pool.

7. A method according to any of claims 1 to 5, characterised in that the method comprises transplanting the plant (2) into soil (5) in a larger container (7) or a pool (6).

8. A method according to any of claims 1 to 7, characterised in that the plant (2) is displayed for sale.

9. A method according to any of claims 1 to 8, characterised in that the container is a pot (1).

10. A method according to any one of claims 1 to 9, characterised in that the method comprises the step of propagating an aquatic plant (2).

11. A method of handling an aquatic plant (2), characterised in that the method comprises the steps of propagating, displaying and transporting a plant (2) and a layer of soil (3) in an impermeable portable container (1).

12. A portable impermeable container (1), characterised in that the container contains a layer of soil (3) (as hereinbefore defined) and an aquatic plant (2) on or in the soil (3).

13. A container according to claim 12, characterised in that the container (1) contains water.

14. A container according to claim 13, characterised in that the container (1) contains sufficient water (4) to form a pool on the surface of the soil (3) within the container (1).

15. A container according to any of claims 12 to 14, characterised in that the container (1) is sized to receive, and contain a single plant (2) of merchantable size.

16. A container according to any of claims 12 to 16, characterised in that the depth of the soil (3) is approximately one third of the depth of the container (1).

17. A container according to any one of claims 12 to 16, characterised in that the container is a plant pot (1) without drainage holes.
